# EUROPÄISCHE PATENTSCHRIFT

(11) **EP 1 815 930 B1**
(45) Veröffentlichungstag und Bekanntmachung des Hinweises auf die Patenterteilung: **20.04.2011**
(21) Anmeldenummer: 07002264.5
(22) Anmeldetag: 02.02.2007
(51) Int. Cl.: B23D 45/06, B23D 47/12, B27B 5/24

(54) **Holzbearbeitungsmaschine, insbesondere Kreissäge mit einem Bearbeitungswerkzeug**
Wood working machine, in particular a circular saw with a cutting tool
Machine de traitement du bois, en particulier scie circulaire dotée d'un outil de traitement

(30) Priorität: 02.02.2006 DE 202006001808 U
(43) Veröffentlichungstag der Anmeldung: 08.08.2007
(73) Patentinhaber: Otto Martin Maschinenbau GmbH & Co. KG, 87724 Ottobeuren (DE)
(72) Erfinder: Martin, Peter, 87700 Memmingen (DE)
(74) Vertreter: Pfister, Stefan Helmut Ulrich

(56) Entgegenhaltungen:
- EP-A1- 0 038 747
- DE-A1- 19 532 726
- US-A- 1 417 669
- US-A- 4 532 844
- US-A1- 2004 250 904

## Beschreibung

Die Erfindung betrifft eine Holzbearbeitungsmaschine, insbesondere Kreissäge, mit einem Bearbeitungswerkzeug, welches auf einer Welle angeordnet ist und die Holzbearbeitungsmaschine eine Höhenverstelleinrichtung für das Bearbeitungswerkzeug aufweist, durch welche der Überstand des Bearbeitungswerkzeuges über dem Tisch, auf dem das zu bearbeitende Werkstück aufliegt, veränderbar ist und von der Sägewelle beabstandet ein Antrieb angeordnet ist, wobei zwischen der Sägewelle und dem Antrieb ein Antriebsmittel vorgesehen ist.

Derartige Holzbearbeitungsmaschinen sind insbesondere als Sägemaschinen, wie Kreissägen, bekannt, bei denen das Sägeblatt schwenkbar und in der Höhe vertikal einstellbar ist. Üblicherweise ist dabei das gesamte Sägeaggregat, bestehend aus Sägeblatt mit entsprechender Spanneinheit und Lagerung, Antriebsmotor und Kraftübertragung, an einer schwenkbar gelagerten Konsole aufgebaut. Zur Höhenverstellung des Sägeblattes wird der Einfachheit halber das gesamte Sägeaggregat, wie zuvor beschrieben, bewegt beziehungsweise geschwenkt. Dabei muß für das gesamte Sägeaggregat ein entsprechend ausreichender Platz vorgesehen werden, um den gesamten Höhenweg für die Verstellhöhe des Sägeblattes verfahren zu können. Dabei stellt insbesondere der großvolumige und gewichtige Antriebsmotor aufgrund des enormen Platzbedarfs und des hohen Gewichtes beim Schwenken ein Problem dar.

Eine Hub- und Senkeinrichtung für das Kreissägeblatt einer automatischen Untertischkreissäge schlägt vor, dass das Kreissägeaggregat von einer einmal eingestellten Höheneinstellung in seine Ausgangsstellung zurückgesenkt werden kann. Dazu wird das Kreissägeblatt unter die Tischebene abgeschwenkt, wodurch ein sofortiges Manipulieren des Schnittgutes ohne Unfallgefahr möglich sein soll.

Es ist weiterhin ein Sicherheitsantrieb für ein elektromotorisch betriebenes Arbeitsgerät mit gefahrbringendem, bewegtem Werkzeug bekannt. Dabei ist ein mit einem Antriebselement versehener elektrischer Generator derart angeordnet, dass er mit der Antriebseinrichtung in Eingriff gebracht werden kann, wobei eine mit dem Schalter des Elektromotors verbundene Betätigungseinrichtung vorgesehen ist, die den Kleingenerator beim Ausrücken des Schalters als Bremsgenerator mit der Antriebseinrichtung in Eingriff bringt.

Es ist weiterhin eine Bearbeitungsmaschine, z. B. eine Kreissäge, bekannt, bei der die Höhenverstellung mittels eines unterhalb der Kreissägewelle vorgesehenen Einstellmechanismus erfolgt. Ein automatischer Abstandsausgleich erfolgt allerdings hier ebenso wie bei den beiden zuvor beschriebenen Lösungen des Standes der Technik nicht.

Aus der EP 00 38 747 A1 ist eine Höhenverstelleinrichtung für das Bearbeitungswerkzeug einer Holzbearbeitungsmaschine, insbesondere einer Kreissäge bekannt, die von einer Position mit einem Überstand über dem Bearbeitungstisch auf einer Stellung unterhalb des Bearbeitungstisches wegschwenkbar ist. In der abgesenkten Stellung kann durch eine Spanneinrichtung der Antriebsriemen nachgespannt werden.

Die Druckschrift US 2004/0250904 A1 offenbart eine Höhenverstellung für ein Kreissägeblatt. Der Antrieb der Welle des Kreissägeblattes erfolgt über einen Schneckenantrieb. Gegenüber diesem Schneckenantrieb ist die Welle in ihrer vertikalen Lage veränderlich.

Die Druckschrift DE 195 32 726 A1 zeigt eine Unterflurkreissägemaschine. Unterhalb des Auflagetisches ist ein verfahrbarer Wagen mit einem höhenverstellbaren Schlitten vorgesehen, auf dem das Kreissägeblatt gelagert ist. Der Antrieb der Welle des Kreissägeblattes erfolgt über einen Riemenantrieb, wobei eine Omega-Schlaufe die unterschiedliche Lage der Welle des Kreissägeblattes zum Antrieb ausgleicht.

Aufgabe der Erfindung ist es, ausgehend vom Stand der Technik, eine Holzbearbeitungsmaschine mit platzsparender Anordnung der Höhenverstellung des Bearbeitungswerkzeuges zur Verfügung zu stellen.

Die Erfindung geht von dem oben beschriebenen Stand der Technik aus und schlägt zur Lösung der gestellten Aufgabe eine Holzbearbeitungsmaschine mit den Merkmalen des Anspruchs 1 vor.

Nach der Erfindung wird demnach eine Holzbearbeitungsmaschine, insbesondere Kreissäge, mit einem Bearbeitungswerkzeug vorgeschlagen, welches auf einer Welle angeordnet ist und die Holzbearbeitungsmaschine eine Höhenverstellung für das Bearbeitungswerkzeug aufweist, durch welche der Überstand des Bearbeitungswerkzeuges über dem Tisch, auf dem das zu bearbeitende Werkstück aufliegt, veränderbar ist und von der Sägewelle beabstandet ein Antrieb angeordnet ist, wobei zwischen der Sägewelle und dem Antrieb ein Antriebsmittel vorgesehen ist, und die Holzbearbeitungsmaschine sich dadurch auszeichnet, daß eine Anpaßvorrichtung für das Antriebsmittel vorgesehen ist, welche das Antriebsmittel an die durch die Höhenverstelleinrichtung bewirkte Abstandsänderung von Sägewelle und Antrieb anpaßt. Durch diese erfindungsgemäß vorgeschlagene Lösung wird jetzt erreicht, daß der Antriebsmotor und seine Befestigung bei der Höhenverstellung des Sägeblattes nicht mehr bewegt werden muß. Vielmehr ist jetzt eine Anpaßvorrichtung für das Antriebsmittel vorgesehen, welches den Unterschied des Abstandes von der Sägewelle zum Antrieb, welcher durch die Verstellbewegung entsteht, automatisch anpaßt. Dadurch gelingt es, eine äußerst platzsparende Anordnung für das gesamte Sägeaggregat jetzt vorzusehen, da das größte Problem bezüglich des notwendigen Platzbedarfes gelöst wurde, indem der Motor nicht mehr verschwenkt wird. Damit ist ein wesentlich geringerer Platzbedarf für die gesamte Verschwenkeinrichtung zur Höhenverstellung der Holzbearbeitungsmaschine jetzt gegeben. Die erfindungsgemäße Holzbearbeitungsmaschine ist bevorzugt an einer Kreissäge vorgesehen. Es ist jedoch von der Erfindung mit umfaßt, andere Holzbearbeitungsmaschinen, wie zum Beispiel Fräsen oder Hobelmaschinen, ebenfalls mit einer solchen Anpaßvorrichtung auszustatten, wenn eine Höhenverstellung des Bearbeitungswerkzeuges an derartigen Maschinen vorgesehen ist.

Gegenüber den weiter oben beschriebenen Lösungen des Standes der Technik zeichnet sich die Erfindung dadurch aus, dass man die platzsparende Anordnung für das gesamte Sägeaggregat bei diesen Lösungen nicht gewährleisten kann. Die Erfindung löst dies damit, dass die Anpassvorrichtung für das Antriebsmittel vorgesehen ist, welche das Antriebsmittel an die durch die Höhenverstelleinrichtung bewirkte Abstandsänderung von Sägewelle und Antrieb anpasst. Damit ist ein händisches Verstellen aufgrund der Veränderung der Höheneinstellung nicht notwendig. Die Hub- und Senkeinrichtung für ein Kreissägeblatt einer automatischen Untertischkreissäge gewährleistet lediglich, dass das Sägeblatt bei einer Rückwärtsbewegung unter die Tischebene abgesenkt wird und dann wieder in die Bearbeitungsstellung angehoben wird. Dazu ist ein aufwendiger Mechanismus notwendig. Insbesondere ist ein zusätzlicher hydraulischer Antrieb notwendig, um die Absenk- und Anhebebewegung realisieren zu können. Das Antriebsaggregat ist bei dieser Lösung mit der Antriebswelle so verbunden, dass es insgesamt bei der Absenk- beziehungsweise Anhebebewegung mit verschwenkt werden muss.

Gegenüber der Lösung eines Sicherheitsantriebs für ein elektromotorisch betriebenes Arbeitsgerät mit gefahrbringendem, bewegtem Werkzeug, ist der Aufwand erheblich reduziert. Insbesondere wird kein zusätzlicher elektrischer Generator benötigt, der dann beim Ausrücken des Schalters für die Antriebsbewegung aktiviert werden muss, um als Bremsgenerator mit der Antriebsvorrichtung in Eingriff zu stehen. Diese Lösung ist demnach lediglich geeignet, die gefahrbringende Bewegung des Antriebswerkzeuges dann zu blockieren, wenn der Schalter ausgerückt ist. Eine automatische Anpassung, wie sie erfindungsgemäß jetzt erreicht wird, ist nicht vorgesehen. Im Übrigen ist eine Verschwenkbewegung des Motoraggregates bei der vorher beschriebenen Lösung des Standes der Technik nicht möglich.

Gegenüber einer weiteren aus dem Stand der Technik bekannten Bearbeitungsmaschine, insbesondere einer Kreissäge, die eine mechanische Höhenverstelleinrichtung aufweist, die durch Verstellen einer Kurbel und einer entsprechenden Blockiereinrichtung die Höheneinstellung bewirkt, zeichnet sich die erfindungsgemäße Lösung dadurch aus, dass der Antriebsmotor beziehungsweise das Antriebsaggregat nicht direkt, wie bei der Lösung des Standes der Technik mit der Antriebswelle für das Bearbeitungswerkzeug verbunden ist, sondern indirekt und dass insbesondere bei einer Höhenverstellung ein automatischer Ausgleich durch die Anpassvorrichtung für das Antriebsaggregat vorgenommen wird. Dadurch wird es ermöglicht, das gesamte Sägeaggregat platzsparend anzuordnen. Dies ist bei der im Stand der Technik bekannten Lösung nicht möglich.

Eine nicht von der Erfindung umfasste Variante schlägt vor, dass eine schwenkbare Kraftübertragungsschwinge mit zumindest einem kraftübertragenden Mittel an einer Lager- und Spannvorrichtung zwischen Antrieb und Welle des Bearbeitungswerkzeuges vorgesehen ist. Dabei wirkt die Kraftübertragungsschwinge als Anpaßvorrichtung, indem diese die bewirkte Abstandsänderung von Sägewelle und Antrieb ausgleicht. Dies kann in der einfachsten Form dadurch geschehen, daß die Sägewelle beispielsweise in einer Führung geführt ist und die Kraftübertragungsschwinge die durch die Höhenveränderung bedingte Abstandsänderung zwischen Antrieb und Sägewelle ausgleicht. Dies kann beispielsweise durch eine teleskopierbare Kraftübertragungsschwinge erreicht werden. Auch durch die Weiterbildung, wie zuvor beschrieben, wird erreicht, daß der Antrieb für die Verstellbewegung nicht mitbewegt werden muß. Vielmehr erfolgt jetzt ein Ausgleich der Abstandsänderung durch die schwenkbare Kraftübertragungsschwinge. Dabei ist das Kraftübertragungsmittel ebenfalls so ausgebildet, daß es trotz der Längenveränderung die Antriebskraft sicher überträgt. Dies kann beispielsweise über eine spezielle Führung über Umlenkrollen gewährleistet werden.

Durch die Erfindung wird vorgeschlagen, dass die Anpaßvorrichtung durch eine doppelte Kraftübertragungsschwinge angegeben ist. Eine doppelte Kraftübertragungsschwinge kann dabei beispielsweise abgewinkelt zueinander vorgesehen sein. Wenn dann die Sägewelle in einer Führung geführt ist, kann eine Höhenverstellung ohne eine Längenveränderung der Kraftübertragungsmittel an den beiden Teilen der Kraftübertragungsschwinge vorgenommen werden. Die Längenveränderung wird beispielsweise durch eine Bewegung am Gelenk der Verbindung der beiden Teile der Kraftübertragungsschwinge ausgeglichen. Der Motor kann, ebenso wie bei den vorher beschriebenen Varianten der Erfindung, fest an der Maschine, zum Beispiel am Gestell oder einer Konsole vorgesehen sein und muß eine Verschwenkbewegung für die Veränderung der Höheneinstellung der Sägewelle nicht mit durchführen. Durch die Erfindung gelingt es, über entsprechende Riemenscheiben oder Kettenräder, ohne komplizierte Umlenkmechanismen auszukommen und trotzdem eine sehr einfache und platzsparende Höhenverstelleinrichtung für die Sägewelle zu erhalten.

Gemäß einer Weiterbildung der Erfindung ist es vorgesehen, daß die Anpaßvorrichtung als teleskopierbare Antriebswelle ausgebildet ist. Auch diese Ausführungsform gestattet eine sehr platzsparende Anordnung des gesamten Sägeaggregates, weil es auch hierdurch gelingt, den Antriebsmotor an einem festen Platz zu positionieren, von dem er für eine Verstellbewegung nicht bewegt werden muß.

Die Erfindung zeichnet sich auch dadurch aus, daß die Lager- und Spannvorrichtung vorzugsweise durch eine Konsole angegeben ist. Die Konsole nimmt dabei den Motor auf und trägt auch die Anpaßvorrichtung, zum Beispiel als Kraftübertragungsschwinge oder teleskopierbare Antriebswelle. In der Konsole ist dabei eine Führung für die Sägewelle vorgesehen, innerhalb derer die Höhenbewegung dieser Welle stattfindet. Die Anpaßvorrichtung übernimmt dabei auch alle notwendigen Mittel für die Antriebskraftübertagung auf die Sägewelle in einer sehr platzsparenden Variante. Die Konsole kann dabei des weiteren alle notwendigen Bestandteile des Sägeaggregates tragen, benötigt nicht den umfänglichen Platzbedarf des Standes der Technik und ist damit insgesamt wesentlich günstiger in der Fertigung und bietet auch entsprechende Vorteile hinsichtlich des Platzbedarfes beim Aufstellen einer solchen Holzbearbeitungsmaschine. Durch den Wegfall der Verschwenkbewegung für den hochgewichtigen Antriebsmotor kann auch Energie eingespart werden.

Die Ausführungsform der Anpassvorrichtung nach der Erfindung in Form einer doppelten Kraftübertragungsschwinge zeichnet sich in einer Weiterbildung dadurch aus, daß die doppelte Kraftübertragungsschwinge aus einer unteren Schwinge und einer oberen Schwinge gebildet ist. Die untere Schwinge ist dabei so gelagert, daß sie mit der Motorwelle korrespondiert und beispielsweise die Antriebsscheibe des Motors trägt. Die obere Schwinge ist an der Sägewelle gelagert und kann der Auf- und Abbewegung dieser Welle folgen. Durch die bewegbare Achse an der verbindungsstelle beider Schwingen gelingt es, die Längenunterschiede, welche durch die Verstellbewegung entstehen, auszugleichen.

In einer Weiterbildung der Erfindung ist es vorgesehen, daß die Kraftübertragungsschwingen als Riemenschwingen ausgebildet sind und das Kraftübertragungsmittel durch einen Riementrieb, zum Beispiel mit Keilriemen, Zahnriemen oder dergleichen angegeben ist. Selbstverständlich ist auch eine Ausführungsform der erfindungsgemäßen Holzbearbeitungsmaschine von der Erfindung mit umfaßt, bei der die Kraftübertragungsschwingen als Kettenschwingen ausgebildet sind und als Kraftübertragungsmittel ein Kettentrieb mit Ketten, Zahnrädern und/oder Ritzeln beziehungsweise vergleichbaren kraftübertragenden Elementen vorgesehen ist.

Bevorzugt ist an der unteren Kraftübertragungsschwinge ein Antrieb, zum Beispiel ein Motor, vorgesehen.

Wie bereits erwähnt, sind nach der Erfindung untere Schwinge und obere Schwinge zueinander abgewinkelt angeordnet, wobei eine Weiterbildung vorschlägt, daß untere und obere Kraftübertragungsschwinge gelenkig miteinander verbunden sind. Hier ist demnach ein Gelenk an der verbindungsstelle der beiden Schwingenteile vorgesehen. Die obere Kraftübertragungsschwinge greift dabei an der Sägewelle des Sägeaggregates an. Die Welle ist bevorzugt in einem höhenbeweglich gelagerten Schlitten vorgesehen.

Der Schlitten ist dabei, gemäß einer weiteren Variante der Erfindung, bevorzugt in einer Führung, insbesondere in Y-Richtung bewegbar. Von der Erfindung umfaßt ist auch eine Ausführungsform, bei der die Führung so ausgebildet ist, daß die Führung hier als Anpaßvorrichtung wirkt, indem sie dem Verlauf der Schwenkbewegung einer nicht oder nur bedingt längenveränderlichen Kraftübertragungsschwinge folgt.

Ein weiterer Aspekt der Erfindung ist dadurch angegeben, daß wenigstens ein Schwingenträger, bevorzugt ein zweigeteilter Schwingenträger, bestehend aus einem ersten Schwingenträger und einem zweiten Schwingenträger, an jeder Kraftübertragungsschwinge vorgesehen ist. Dadurch gelingt es, eine Längenveränderung an dem Schwingenträger selbst durch die Zweiteilung zu bewirken.

Eine Variante der zuvor beschriebenen Ausführungsform zeichnet sich dabei dadurch aus, daß erster und zweiter Schwingenträger längsbeweglich miteinander verbunden sind.

Es ist weiterhin vorgesehen, daß zwischen erstem und zweitem Schwingenträger eine Druckfeder, bevorzugt eine einstellbare und/oder entlastbare Druckfeder, angeordnet ist. Dadurch wird beispielsweise erreicht, daß die Schwinge immer in einer optimal gespannten Position verbleibt und insbesondere die Kraftübertragungsmittel durch diese Druckfeder mitgespannt werden können.

Eine Weiterbildung der Erfindung sieht vor, daß erster und zweiter Schwingenträger über korrespondierend zueinander angeordnete Führungsmittel, wie zum Beispiel eine in einer Nut geführte Feder, längsbeweglich verbunden sind. Damit erhält man gewissermaßen eine einfache Ausführungsvariante einer teleskopierbaren Kraftübertragungsschwinge.

Es ist in einer Variante der Erfindung vorgesehen, daß ein Spannmechanismus zur Spannung wenigstens einer der Kraftübertragungsschwingen vorgesehen ist. Dieser Spannmechanismus dient nicht dem Spannen der zweigeteilten Schwinge in Form der Schwingenträger, sondern dient der Spannung der oberen Kraftübertragungsschwinge gegenüber der Konsole beziehungsweise der Bearbeitungsmaschine, insbesondere der Spannung des Antriebsmittels dieser Schwinge. Damit kann die Zweiteilung der oberen Schwinge entfallen.

Demnach ist, entsprechend einer Weiterbildung der Erfindung, der Spannmechanismus durch eine Zugfeder, bevorzugt durch eine einstellbare beziehungsweise entlastbare Zugfeder, angegeben. Selbstverständlich ist von der Erfindung auch eine Lösung umfaßt, bei der als Spannmechanismus ein Exzenter vorgesehen ist.

Die Erfindung schlägt, entsprechend einer Weiterbildung der Erfindung, auch vor, daß die Konsole zusätzlich seitlich verschwenkbar gelagert ist.

Eine Ausführungsform der Erfindung ist weiterhin dadurch gekennzeichnet, daß Riemenscheiben oder Kettenräder beziehungsweise Ritzel zur Übertragung der Antriebskraft an Antrieb, untere Schwinge, obere Schwinge und Welle als Antriebsübertragungsmittel vorgesehen sind.

Die Erfindung wird nachfolgend anhand von Ausführungsbeispielen weiter beschrieben. Es zeigen
- Fig. 1: in einer schematischen Darstellung eine Ausführungsform eines Teiles der erfindungsgemäßen Holzbearbei- tungsmaschine;
- Fig. 2: die Ausführungsform der nach Fig. 1 mit einer anderen Stellung der Sägewelle und
- Fig. 3: Ausführungsform mit einer Kraft- übertragungsschwinge mit erstem und zweitem Schwingenträger sowie einem Spannmechanismus.

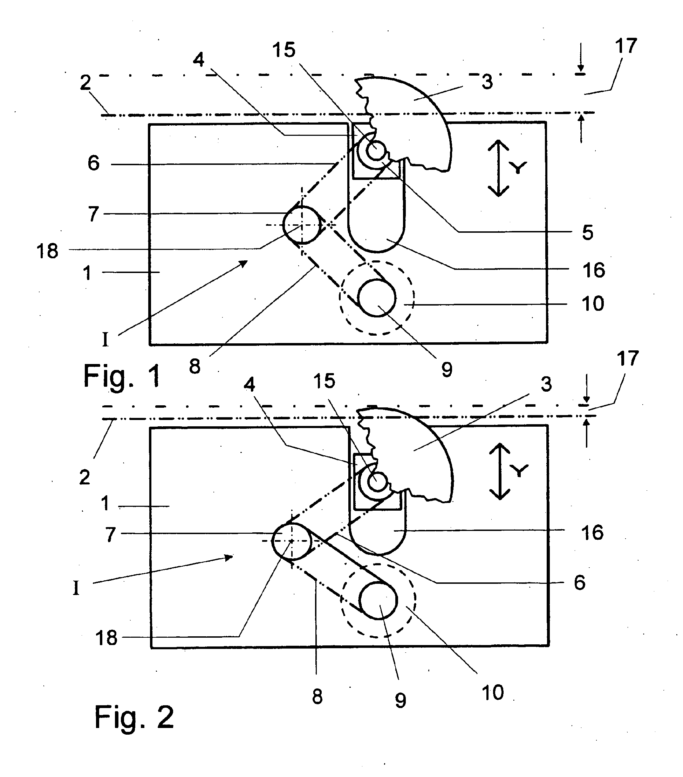

Die Fig. 1 zeigt in einer schematischen Darstellung eine Ausführungsform der erfindungsgemäßen Holzbearbeitungsmaschine, wobei hier nur der Teil der Höhenverstelleinrichtung der Holzbearbeitungsmaschine abgebildet ist. Mit dem Bezugszeichen I und einem Pfeil ist die Anpaßvoxrichtung angedeutet. Sie besteht in der dargestellten Variante der Fig. 1 aus einer doppelten Kraftübertragungsschwinge, wobei die untere Schwinge das Bezugszeichen 8 und die obere Schwinge das Bezugszeichen 6 trägt. Beide Schwingen 6, 8 besitzen kraftübertragende Mittel 61, 81. Obere und untere Schwinge 6, 8 sind an einer mit dem Bezugszeichen 7 bezeichneten Riemenscheibe bzw. an einer dort befindlichen Achse 18 gelenkig miteinander verbunden. Die dargestellte Variante zeigt beispielsweise einen Riementrieb mit Antrieb 10 der Motorriemenscheibe 9, der mittleren Riemenscheibe 7 und einer oberen Riemenscheibe 5. Die obere Riemenscheibe 5 ist dabei gleichzeitig auf der Welle 15 vorgesehen und treibt das Bearbeitungswerkzeug 3, hier nur als Teil des Bearbeitungswerkzeuges dargestellt, an. Mit dem Doppelpfeil Y ist die Beweglichkeit der welle 15 angedeutet. Die Welle 15 ist dabei in einer Führung 16 geführt, so daß bei einer Verstellbewegung sich die untere und obere Kraftübertragungsschwinge 8, 6 aufeinander zu beziehungsweise voneinander weg abgewinkelt bewegen. Dies wird ersichtlich durch den Vergleich der Fig. 1 mit der Figur 2, wo das Bearbeitungswerkzeug 3 in einer abgesenkten Position bezüglich der mit einer strichpunktierten Linie 2 angedeuteten Auflagefläche für das zu bearbeitende Werkstück dargestellt ist. Der Überstand über dieser Auflagelinie 2 ist dabei mit dem Bezugszeichen 17 angedeutet und, wie aus beiden Figuren ersichtlich, in der Fig. 2 geringer als in Fig. 1.

Die untere Riemenscheibe 9 ist auf der Motorwelle des Motors 10 angeordnet und treibt das Antriebsmittel, zum Beispiel einen Keilriemen oder einen Zahnriemen, auf der unteren Kraftübertragungsschwinge 8 an. Über die mittlere Riemenscheibe 7 erfolgt dann die Kraftübertragung auf die obere Kraftübertragungsschwinge 6 beziehungsweise an ein dort vorgesehenes Kraftübertragungsmittel. Die Welle 15 für das Bearbeitungswerkzeug 3 ist in der dargestellten Variante noch in einem höhenbeweglichen (Y-Achse) Schlitten 4 vorgesehen. Die gesamte Höhenverstellvorrichtung ist an der Konsole 1 angeordnet, wodurch die kompakte und platzsparende Bauweise sehr deutlich wird.

Die Fig. 2 beschreibt, wie weiter oben bereits kurz erwähnt, die Variante der Fig. 1 in einer abgesenkten Position. Dadurch ist der Überstand 17 geringer als in der Fig. 1. Alle anderen Bezugszeichen und Abläufe wurden bei der Vorstellung der Fig. 1 bereits erläutert, so daß auf eine erneute Vorstellung verzichtet wird.

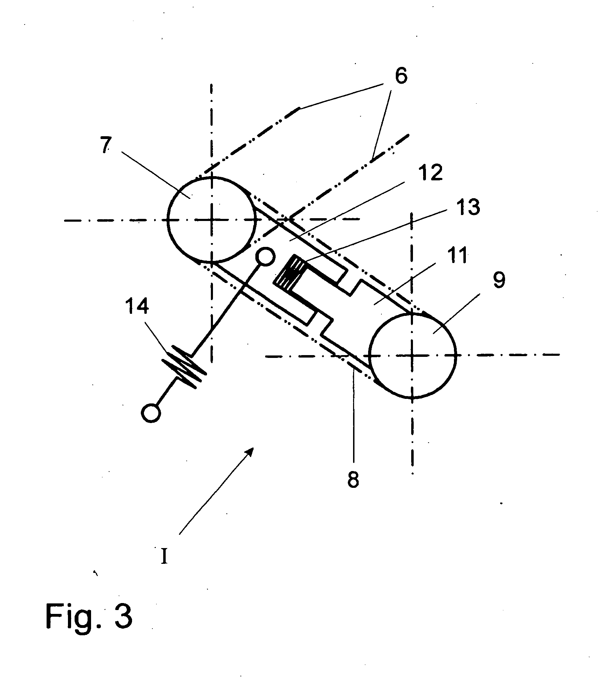

Die Fig. 3 zeigt einen Teil einer Kraftübertragungsschwinge 8 in einer speziellen Ausführungsvariante. Hierbei ist ein zweigeteilter Schwingenträger, bestehend aus erstem Schwingenträger 11 und zweitem Schwingenträger 12, schematisch dargestellt. Diese Schwingenträger können selbstverständlich auch an der hier nicht weiter gezeigten oberen Kraftübertragungsschwinge 6 so vorgesehen sein. Die beiden Schwingenträger 11 und 12 sind derart ausgebildet, daß sie in einer Art Nut-Feder-Führung, gewissermaßen ineinander gesteckt, geführt sind. Bevorzugt ist es dabei, wie hier in dieser Variante dargestellt, wenn eine Druckfeder 13 hier die beiden Schwingenträger 11 und 12 auseinanderdrückt und somit das Kraftübertragungsmittel der Kraftübertragungsschwinge 8 in einer ständig gespannten Stellung hält, so daß eine optimale Kraftübertragung für den Antrieb gewährleistet ist. Ein automatisches Nachspannen ist dabei automatisch gegeben.

Die Erfindung zeigt auch einen Spannmechanismus 14, der hier durch eine Zugfeder angegeben ist. Dieser hält die untere Kraftübertragungsschwinge entweder bezüglich der Konsole oder aber bezüglich des Maschinengestells in einer gespannten Position, bewirkt jedoch insbesondere, daß das Antriebsmittel der oberen Kraftübertragungsschwinge 6 ständig gespannt ist, während eine zusätzliche Spanneinrichtung für diese Schwinge entfällt. Damit kann Platz gewonnen werden, der zum Beispiel für eine Absaugvorrichtung benötigt wird.

Entscheidend für die Erfindung ist, daß der in den Figuren 1 und 2 dargestellte Höhenweg (Y-Achse) von den Kraftübertragungsschwingen 6, 8 ermöglicht wird, ohne den Motor 10 zu bewegen. Die Kraftübertragung erfolgt durch Riemen wie Keilriemen, Zahnriemen oder auch Flachriemen. Selbstverständlich können auch Ketten oder andere kraftübertragende Elemente an den Kraftübertragungsschwingen 6, 8 vorgesehen sein. Das bei dieser Konstruktion zu lösende Problem der Gewährleistung einer permanenten gleichmäßigen Riemenspannung der beiden Schwingen kann ebenfalls auf unterschiedliche Weise erfolgen. In der Ausführungsform der Fig. 3 ist lediglich ein Ausführungsbeispiel dafür dargestellt. Dabei wird, wie bereits erwähnt, die mittlere Riemenscheibe 7 von einem zweigeteilten Schwingenträger 11, 12 getragen. Der erste Schwingenträger 11 ist dabei koaxial zur Motorriemenscheibe 9 auf der Motorachse drehbar gelagert. Der erste Teil des Schwingenträgers 11 steckt längsbeweglich in dem zweiten Schwingenträger 12. Beide Teile werden, wie bereits beschrieben, über eine Druckfeder 13 auseinandergedrückt, so daß die untere Kraftübertraguhgsschwinge 8 beziehungsweise deren Kraftübertragungsmittel definiert gespannt wird.

Diese Druckfeder 13 ist selbstverständlich, entsprechend einer Variante der Erfindung, einstellbar und entlastbar gestaltet, um einen einfachen Riemenwechsel zu ermöglichen. Eine einfache und hier nicht zeichnerisch dargestellte Alternative zur Druckfeder 13 ist ein Exzenter, der günstigerweise mit derjenigen Achse kombiniert wird, mit der die mittlere Riemenscheibe 7 auf dem zweiten Schwingenträger 12 befestigt ist. So kann dann die Kraftübertragungsschwinge 6 beispielsweise einteilig ausgeführt werden, und die Spannung des Kraftübertragungsmittels kann so einfach durch Verstellen dieses Exzenters erfolgen. Allerdings ist so kein automatischer Ausgleich einer nachlassenden Spannung des Kraftübertragungsmittels möglich.

Eine Kraftübertragungsschwinge mit Schwingenträgern und Spannmechanismen, wie zuvor beschrieben, kann auch die obere Kraftübertragungsschwinge 6 mit den Riemenrädern 7 und 5 verbinden. Hier kann jedoch eine alternative Lösung aufgezeigt werden, die einen freien Bauraum im Bereich der Welle 15 ermöglicht, wie er beispielsweise für die Absaugung benötigt wird. An der gesamten aus den beiden Schwingenträgern 11 und 12 bestehenden unteren Kraftübertragungsschwinge 8 wird beispielsweise über eine Zugfeder 14 ein Drehmoment angebracht, über das die obere Kraftübertragungsschwinge 6 definiert gespannt wird. Auch hier gilt natürlich, daß die Zugfeder 14 günstigerweise einstellbar und/oder entlastbar gestaltet wird, um auch hier einen Wechsel des Antriebsmittels einfach zu ermöglichen.

## Patentansprüche

1. Holzbearbeitungsmaschine, insbesondere Kreissäge, mit einem Bearbeitungswerkzeug, welches auf einer Welle angeordnet ist und mit einer Höhenverstelleinrichtung für das Bearbeitungswerkzeug, durch welche der Überstand des Bearbeitungswerkzeuges über dem Tisch, auf dem das zu bearbeitende Werkstück aufliegt, veränderbar ist und mit einem von der Welle beabstandet angeordneten Antrieb, wobei zwischen der Welle und dem Antrieb ein Antriebsmittel und eine Anpaßvorrichtung (I) für das Antriebsmittel vorgesehen ist, welche das Antriebsmittel an die durch die Höhenverstelleinrichtung bewirkte Abstandsänderung von Welle (15) und Antrieb (9) anpaßt, **dadurch gekennzeichnet, daß** als Anpassvorrichtung (I) eine doppelte Kraftübertragungsschwinge (6, 8) zur Übertragung der Antriebskraft mit zumindest je einem kraftübertragenden Mittel (61, 81) an einer Lager- und Spannvorrichtung zwischen Antrieb und Welle (15) des Bearbeitungswerkzeuges (3) vorgesehen ist, deren untere Schwinge (8) und obere Schwinge (6) abgewinkelt zueinander angeordnet sind, wobei an ihrer Verbindungsstelle eine bewegbare Achse (18) vorgesehen ist.

2. Holzbearbeitungsmaschine nach Anspruch 1, **dadurch gekennzeichnet, dass** die Lager- und Spannvorrichtung vorzugsweise durch eine Konsole (1) angegeben ist.

3. Holzbearbeitungsmaschine nach einem der vorhergehenden Ansprüche, **dadurch gekennzeichnet, dass** die Kraftübertragungsschwingen (6, 8) als Riemenschwingen ausgebildet sind und das Kraftübertragsmittel (61, 81) durch einen Riementrieb, zum Beispiel mit Keilriemen, Zahnriemen oder dergleichen angegeben ist.

4. Holzbearbeitungsmaschine nach einem der vorhergehenden Ansprüche, **dadurch gekennzeichnet, dass** die Kraftübertragungsschwingen (6,8) als Kettenschwingen ausgebildet sind und als Kraftübertragungsmittel (61, 81) ein Kettentrieb mit Ketten, Zahnrädern und/oder Ritzeln bzw. vergleichbaren kraftübertragenden Elementen vorgesehen ist.

5. Holzbearbeitungsmaschine nach einem der vorhergehenden Ansprüche, **dadurch gekennzeichnet, dass** an der unteren Kraftübertragungsschwinge (8) ein Antrieb (10), z.B. ein Motor, vorgesehen ist.

6. Holzbearbeitungsmaschine nach einem der vorhergehenden Ansprüche, **dadurch gekennzeichnet, dass** untere und obere Kraftübertragungsschwinge (6, 8) gelenkig miteinander ver bunden sind und die obere Kraftübertragungsschwinge (6) an der Welle (15) für das Bearbeitungswerkzeug (3) angreift.

7. Holzbearbeitungsmaschine nach einem der vorhergehenden Ansprüche, **dadurch gekennzeichnet, dass** die Welle (15) für das Bearbeitungswerkzeug (3) an einem höhenbeweglich gelagerten Schlitten (4) vorgesehen ist und der Schlitten (4) bevorzugt in einer Führung (16) in Y-Richtung bewegbar ist.

8. Holzbearbeitungsmaschine nach einem der vorhergehenden Ansprüche, **dadurch gekennzeichnet, dass** wenigstens ein Schwingenträger, bevorzugt ein zweigeteilter Schwingenträger, bestehend aus erstem Schwingenträger (11) und zweitem Schwingenträger (12) an wenigsten einer Kraftübertragungsschwinge (6, 8) vorgesehen ist.

9. Holzbearbeitungsmaschine nach einem der vorhergehenden Ansprüche, **dadurch gekennzeichnet, dass** erster und zweiter Schwingenträger (11, 12) längsbeweglich miteinander verbunden sind und zwischen erstem und zweitem Schwingenträger (11, 12) eine Druckfeder (13), bevorzugt eine einstellbare und/oder entlastbare Druckfeder angeordnet ist.

10. Holzbearbeitungsmaschine nach einem der vorhergehenden Ansprüche, **dadurch gekennzeichnet, dass** erster und zweiter Schwingenträger (11, 12) über korrespondierend zueinander angeordnete Führungsmittel, wie zum Beispiel eine in einer Nut geführte Feder, längsbeweglich verbunden sind.

11. Holzbearbeitungsmaschine nach einem der vorhergehenden Ansprüche, **dadurch gekennzeichnet, dass** ein Spannmechanismus zur Spannung wenigstens einer der Kraftübertragungsschwingen vorgesehen ist und der Spannmechanismus durch eine Zugfeder (14), bevorzugt durch eine einstellbare bzw. entlastbare Zugfeder (14) angegeben ist oder als Spannmechanismus ein Exzenter vorgesehen ist.

12. Holzbearbeitungsmaschine nach einem der vorhergehenden Ansprüche, **dadurch gekennzeichnet, dass** die Konsole (1) seitlich verschwenkbar gelagert ist.

13. Holzbearbeitungsmaschine nach einem der vorhergehenden Ansprüche, **dadurch gekennzeichnet, dass** Riemenscheiben (5, 7, 9) oder Kettenräder bzw. Ritzel zur Übertragung der Antriebskraft an Antrieb (10), unterer Schwinge (8), oberer Schwinge (6) und Welle (15) als Antriebsübertragungsmittel vorgesehen sind.

## Claims

1. Wood working machine, in particular circular saw, with a machining tool arranged on a shaft, and with a height adjustment device for the machining tool through which the projection of the machining tool beyond the table, where the work piece to be machined is supported, can be changed, and with a drive spaced apart from the shaft, wherein between the shaft and the drive a driving means and an adaptation device (I) for the driving means is provided that adapts the driving means to the distance change of shaft (15) and d rive (9) caused by the height adjustment device, **characterized in that** as adaptation device (I) a double power transmission rocker (6, 8) is provided for transmitting the driving power with at least one power-transmitting means (61, 81) each on a bearing and clamping device between drive and shaft (15) of the machining tool (3), the bottom rocker (8) and the top rocker (6) of which are arranged to each other angularly, wherein on their connection point a movable axle (18) is provided.

2. Wood working machine according to claim 1, **characterized in that** the bearing and clamping device is preferably defined by a console (1).

3. Wood working machine according to one of the preceding claims, **characterized in that** the power transmission rockers (6, 8) are designed as strap rockers, and the means (61, 81) for power transmission is defined by a belt drive, for example with V-belt, toothed belt or the like.

4. Wood working machine according to one of the preceding claims, **characterized in that** the power transmission rockers (6, 8) are designed as chain rockers, and as power transmission means (61, 81) a chain drive with chains, toothed wheels and/or pinions or comparable power-transmitting elements is provided.

5. Wood working machine according to one of the preceding claims, **characterized in that** at the bottom power transmission rocker (8) a drive (10), for example a motor, is provided.

6. Wood working machine according to one of the preceding claims, **characterized in that** the bottom and the top power transmission rocker (6, 8) are connected to each other flexibly, and the top power transmission rocker (6) engages on the shaft (15) for the machining tool (3).

7. Wood working machine according to one of the preceding claims, **characterized in that** the shaft (15) for the machining tool (3) is provided on a slide (4) supported vertically moving, and the slide (4) can be moved preferably in a guide (16) in Y-direction.

8. Wood working machine according to one of the preceding claims, **characterized in that** at least one rocker carrier, preferably a rocker carrier divided in two, consisting of first rocker carrier (11) and a second rocker carrier (12), is provided on at least one power transmission rocker (6, 8).

9. Wood working machine according to one of the preceding claims, **characterized in that** first and second rocker carrier (11, 12) are connected to each other longitudinally moving, and between first and second rocker carrier (11, 12) a pressure spring (13), preferably an adjustable and/or relievable pressure spring is arranged.

10. Wood working machine according to one of the preceding claims, **characterized in that** first and second rocker carrier (11, 12) are connected to each other longitudinally moving via guiding means arranged correspondingly to each other, such as, for example, a spring guided in a groove.

11. Wood working machine according to one of the preceding claims, **characterized in that** a clamping gear is provided for clamping at least one of the power transmission rockers, and the clamping gear is defined by a tension spring (14), preferably an adjustable or relievable tension spring (14), or as clamping gear an eccentric is provided.

12. Wood working machine according to one of the preceding claims, **characterized in that** the console (1) is supported swiveling laterally.

13. Wood working machine according to one of the preceding claims, **characterized in that** pulleys (5, 7, 9) or chain wheels or pinions for transmitting the driving power to drive (10), bottom rocker (8), top rocker (6) and shaft (15) are provided as power transmission means.

## Revendications

1. Machine d'usinage de bois, en particulier une scie circulaire, comportant un outil d'usinage situé sur un arbre de rotation et un dispositif d'ajustement de la hauteur de l'outil d'usinage permettant d'ajuster la différence verticale entre l'outil d'usinage et la table d'usinage sur laquelle est maintenue la pièce à usiner et comportant également une commande séparée de l'arbre par un moyen d'entrainement et un dispositif d'ajustement (I) destiné au moyen d'entrainement permettant d'adapter le moyen d'entrainement à la distance rendue variable par le dispositif d'ajustement entre la hauteur de l'arbre (15) et celle de la commande (9), **caractérisée en ce que** le dispositif d'ajustement (I) est un levier double de transmission de force (6,8) permettant de transmettre la force de la commande par au moins un moyen de transmission de force (61, 81) situé au niveau d'un dispositif de manutention et de fixation entre la commande et l'arbre (15) de l'outil d'usinage (3) et dont le levier inférieur (8) forme un angle avec le levier supérieur (6) autour d'un axe de pivotement (18).

2. Machine d'usinage de bois selon la revendication 1, **caractérisée en ce que** le dispositif de manutention et de fixation est de préférence représenté par la table de la machine (1).

3. Machine d'usinage de bois selon une des revendications précédentes, **caractérisée en que** les leviers de transmission de forces (6, 8) sont équipés de courroies et possèdent comme moyen de transmission des forces (61, 81) une commande à courroie, par exemple une courroie conique, une courroie à dents ou une courroie similaire.

4. Machine d'usinage de bois selon une des revendications précédentes, **caractérisée en ce que** les leviers de transmission de force (6, 8) sont équipés de chaînes et possèdent comme moyen de transmission des forces (61, 81) une commande à chaines, ou à roues dentées et/ou des pignons ou des éléments de transmission de forces similaires.

5. Machine d'usinage de bois selon une des revendications précédentes, **caractérisée en ce qu'**une commande (10) telle un moteur est située au niveau du levier inférieur de transmission de force (8).

6. Machine d'usinage de bois selon une des revendications précédentes, **caractérisée en ce que** les leviers de transmission de force inférieure et supérieure (6, 8) sont liés par une articulation et **en ce que** le levier de transmission de force supérieur (6) agit sur l'arbre de rotation (15) de l'outil d'usinage (3).

7. Machine d'usinage de bois selon une des revendications précédentes, **caractérisée en ce que** l'arbre de rotation (15) de l'outil d'usinage (3) est maintenu par un coulisseau (4) mobile verticalement et **en ce que** le coulisseau (4) est de préférence mobile en direction Y et à l'intérieur d'un guidage (16).

8. Machine d'usinage de bois selon une des revendications précédentes, **caractérisée en ce qu'**au moins un élément de levier et de préférence deux éléments de leviers sont présent au niveau d'au moins un levier de transmission de force (6, 8) et **en ce qu'**ils sont constitués d'un premier élément de levier (11) et d'un deuxième élément de levier (12).

9. Machine d'usinage de bois selon une des revendications précédentes, **caractérisée en ce que** le premier et le deuxième élément de levier (11, 12) sont liés entre eux de façon longitudinalement mobile et **en ce qu'**un ressort (13) à pression et/ou **en ce qu'**un ressort à pression ajustable est situé entre le premier et le deuxième élément de levier (11, 12).

10. Machine d'usinage de bois selon une des revendications précédentes, **caractérisée en ce que** le premier et le deuxième élément de levier (11, 12) sont longitudinalement mobiles à l'aide de moyens de guidages interagissant tels un ressort guidé à l'intérieure d'une gorge.

11. Machine d'usinage de bois selon une des revendications précédentes, **caractérisée en ce qu'**il existe un dispositif de tension comportant un ressort à tension (14) et de préférence un ressort à tension ajustable (14) ou **en ce que** le dispositif de tension est formé par un élément excentré.

12. Machine d'usinage de bois selon une des revendications précédentes, **caractérisée en ce que** la table de machine (1) est fixée de façon à permettre son pivotement latérale.

13. Machine d'usinage de bois selon une des revendications précédentes, **caractérisée en ce que** des roues à courroies (5, 7, 9) ou des roues dentées ou des pignons sont utilisés comme moyen de transmission de force de commande au niveau de la commande (10), du levier inférieur (8), du levier supérieur (6) et de l'arbre de rotation (15).
